# EUROPEAN PATENT SPECIFICATION

(11) **EP 1 549 184 B1**
(45) Date of publication and mention of the grant of the patent: **03.01.2007**
(21) Application number: 02783541.2
(22) Date of filing: 03.10.2002
(51) Int. Cl.: A47J 31/40, A47J 31/06

(54) **A PROCESS AND A DEVICE FOR PREPARING BEVERAGES FROM SOLUBLE PRODUCTS**
VERFAHREN UND VORRICHTUNG ZUR ZUBEREITUNG VON GETRÄNKEN AUS AUFLÖSBAREN PRODUKTEN
PROCESSUS ET DISPOSITIF DE PREPARATION DE BOISSONS A PARTIR DE PRODUITS SOLUBLES

(43) Date of publication of application: 06.07.2005
(73) Proprietor: Tuttoespresso S.p.a., 21042 Caronno Pertusella (IT)
(72) Inventor: MAJER DOGLIONI, Luca, I-22010 Carate Urio (IT)
(74) Representative: Gislon, Gabriele
(86) International application number: PCT/IT2002/000630
(87) International publication number: WO 2004/030499

(56) References cited:
- WO-A-02/076270
- CH-A- 688 686
- US-A- 5 008 013
- US-A- 5 347 916

## Description

The present invention relates to a device and a method for the preparation of beverages from soluble products contained in disposable cartridges. In particular, the invention relates to the preparation of beverages carried out in machines provided with a collecting device designed to receive a cartridge of soluble product in order to produce hot beverages such as coffee, cappuccino, tea or the like.

### BACKGROUND ART

In known machines, groups designed for the preparation and dispensing of beverages generally comprise a collecting device having a seat that receives a disposable cartridge.

Since the disposable cartridges are originally sealed to avoid spillage of the soluble product during handling, the collecting device is generally fitted with a piercing member that opens one or more outlet openings on a wall of the cartridge (for example, on the base wall of the same) in correspondence to a plurality of pre-established breaking lines.

Once the cartridge is inserted into the appropriate seat on the collecting device, hot water is admitted under pressure to the inside of the cartridge through one its entry ports in order to form a beverage consisting of a suspension or dispersion or solution in water of the soluble product, which beverage is delivered through an outlet opening or hole located on the cartridge.

A good dispensing group must guarantee complete and uniform solubilization or suspension/dispersion of the product in the fluid (usually water) inside the cartridge and good final appearance of the beverage; in the case of coffee and cappuccino good final appearance means being "creamy", i.e. having an appreciable amount of a layer of enduring small-bubble froth. Obtaining such a result is complicated by the fact that the shape and dimensions of the cartridge are the same for all products dispensed, while the amount of soluble product in the cartridge varies dramatically from product to product (for example: 1.5 grams for espresso coffee and 15-16 grams of product for chocolate and cappuccino). This variation in amount can made difficult to obtain a homogeneously solubilized-suspended beverage, Another problem of known dispensing groups is guaranteeing thorough cleaning of the group; this requires avoiding the use of dispensing pipes and tubes with section less than 2 mm, because of the risk of formation of coatings and residues in the same.

In a previous patent application, WO 02/076270, in the name of the same Applicant, it is suggested to provide a throttling arrangement along the dispensing course of the beverage, with the aim of improving the mixing of the soluble product with the water admitted to the cartridge and of creating a pressure gradient inside the cartridge so as to obtain a good quality beverage with attractive appearance on delivery. This has been achieved by means of a piercing member having a diameter greater than the diameter of the product outlet opening: the pressure of the water on arrival in the cartridge determines solubilization and delivery of the beverage.

However, it has been found that the beverage obtained is not always optimum, in particular with respect to the amount and duration of cream produced.

### SUMMARY OF THE INVENTION

The object of the present invention is therefore to produce a device and method for the preparation of beverages able to guarantee optimum and consistent results from the quality of beverage point of view.

This object is achieved by the present invention by means of a device for the preparation of beverages according to Claim 1. Particular embodiments of the device according to the invention are reported in the dependent Claims from 2 to 13.

According to the present invention, the beverage preparation device comprises means of regulating the dispensing of the beverage in such way that the soluble product is delivered in suspension for at least 75% of the total dispensing time.

According to the present invention, the means of regulation comprise one or more delivery ports or ducts between the piercing member and the cartridge outlet opening.

The delivery port has a substantially circular crown section, and the ratio R between the diameter of the outlet opening and the diameter of the section of engagement of the piercing member is 1<R≤1.067, preferably 1<R≤1.04, still more preferably 1<R≤1.02 and still more preferably 1<R≤1.014. For example; fixing the diameter D2 of the piercing member at 15 mm, gives the diameter D1 of the outlet opening in the cartridge as 15<D1≤16 mm, more preferably 15<D1≤15.6 mm, still more preferably 15<D1≤15.3 mm, and still more preferably 15<D1≤15.2 mm.

In another possible embodiment, adoptable in combination with the previous one, the means of regulation comprise one or more stop elements for limiting the deformation of a portion of the cartridge wall in proximity of the outlet opening.

Such stop elements could comprise for example: one or more supports of the piercing member; or a annular member having diameter greater than the outlet opening.

In the latter case, the annular member has a surface portion tilted towards the piercing member and towards the base wall of the cartridge, with inclination between 1° and 45° with respect to a horizontal plane supported on the annular member, more preferably with inclination between 15° and 38° or still more preferably equal to 30° with respect to a horizontal plane supported on the annular member.

According with a second aspect of the present invention, a method for preparation of beverages as specified in Claim 14 is provided for. Further favourable characteristics of the method according to the invention are reported in the dependent Claims from 15 to 25.

The dispensing device according to the invention has numerous advantages. The reduced diameter dispensing openings that are formed between cartridge and piercing member during the beverage dispensing phase constitute a temporary throttling, i.e. a throttling that is eliminated at each delivery when the cartridge is removed, and that is newly created at the following delivery when a new cartridge is inserted into the collecting-piercing device. Further advantages are the homogenous and uniform solubilization/dispersion/suspension of the product and the production of a beverage with optimum appearance.

### BRIEF DESCRIPTION OF THE DRAWINGS

Further characteristics and advantages of the present invention will become clearer from the following description which is given by way of example and is not limiting, with reference to the attached schematic drawings, in which:
- Figure 1 is a perspective view of a cartridge which can be used on a dispensing device according to the present invention;
- Figure 2 is a section view of the cartridge of fig. 1;
- Figure 3 is a perspective view of a collecting-piercing device;
- Figure 4 is a section view of the collecting-piercing device of fig. 3 with a cartridge inserted and perforated;
- Figure 5 is a section view of a further type of collecting-piercing device supplied with a deformation control ring;
- Figure 6 is a plan view of the collecting-piercing device of fig. 5;
- Figures 7 and 8 are a plan view and an enlarged view of two possible embodiments of the product outlet opening of the cartridge;
- Figure 9 is a view similar to that of figure 5 of further means of controlling deformation.

### MODE FOR CARRYING OUT THE INVENTION

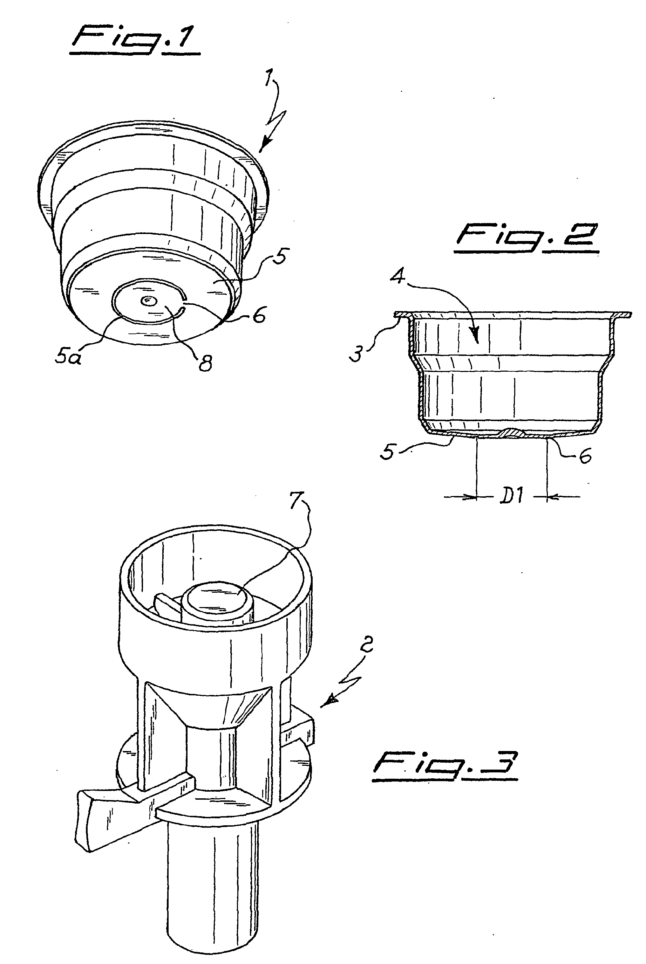

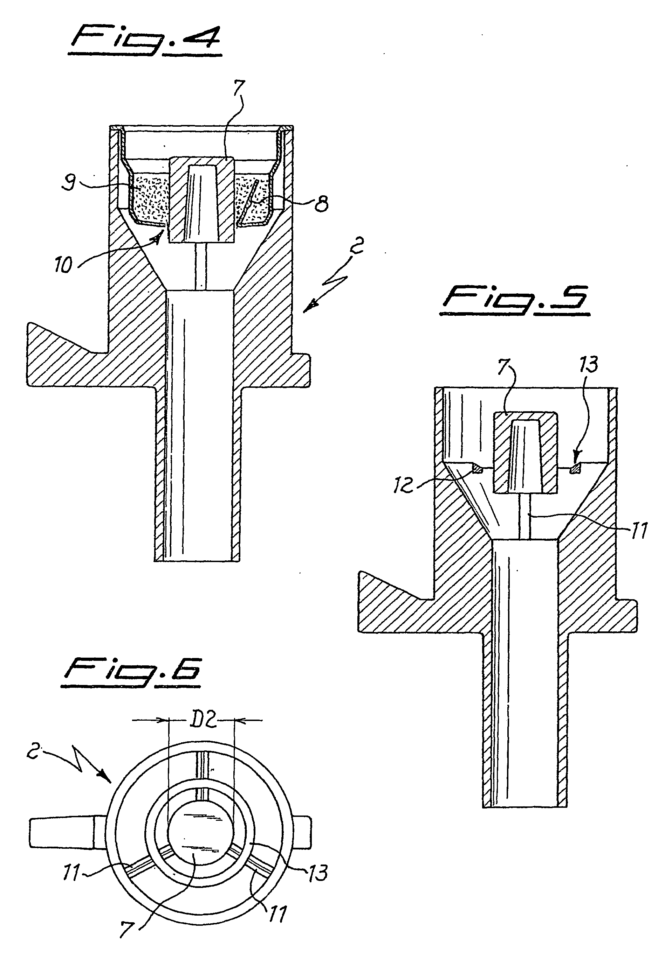

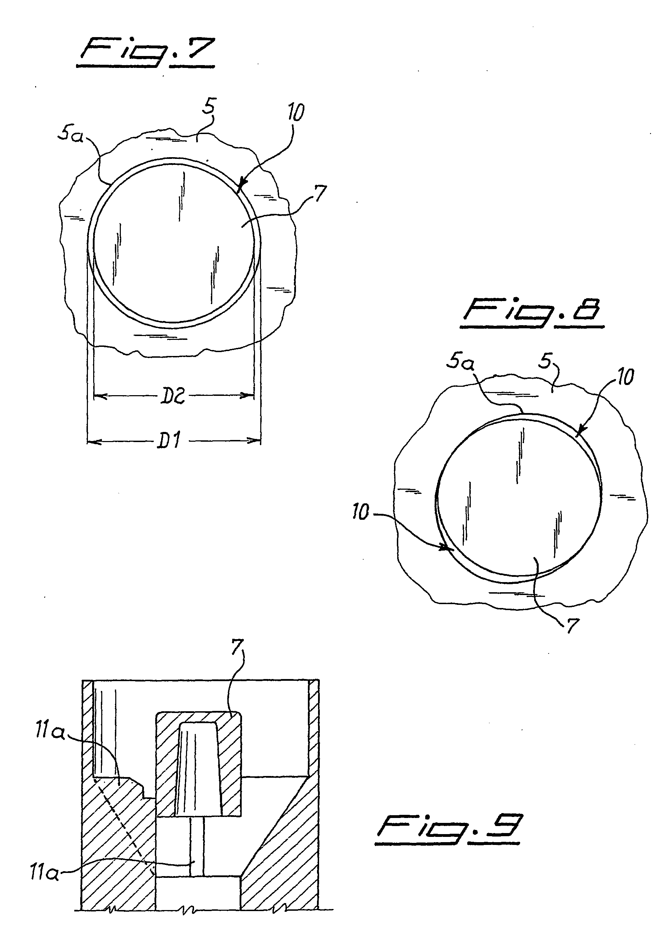

With reference to figures 1-3, the dispensing device according to the invention comprises a disposable cartridge 1 and a collecting-piercing device 2. The cartridge 1 is equipped with an upper surface with an opening 4 encircled by a flange 3, and by a lower base wall 5 on which a breaking line 5a is cut so that it defines an outlet for the solubilized product. The upper opening 4 is closed in a known way by a cover (not shown) provided with one or more inlet holes for the water of infusion, solubilization or dispersion-suspension. In a known way, the breaking line 5a consists of a linear curved portion of the base wall having reduced thickness and such that it can be easily broken by the piercing cylinder 7 of the collecting device 2; the line 5a is interrupted in correspondence to a portion 6 that constitutes a hinge for portion 8 of the base wall (referred to as "cover") defined by the line 5a and preventing the separation of the same from the rest of base wall 5 after the cartridge has been engaged on the collecting-piercing device 2 (fig. 4).

In figure 4 a cartridge 1 is shown in dispensing position, i.e. in the position in which it has been engaged by cylinder 7, which has caused the opening of base wall 5 along the line 5a and the rotation of base portion 8 towards the inside of the cartridge, thus forming the corresponding opening. The soluble product to be delivered is outlined and indicated by 9.

According to the present invention the dimensions of the piercing cylinder 7 and of portion 8 of base wall 5 are such that when the cartridge is inserted onto cylinder 7, before feeding hot water under pressure, there is at least one port or space 10 between the base wall 5 and piercing member 7 to allow the exit of the solubilized or dispersed or suspended product. The port 10 is preferably provided in the shape of a circular crown (fig. 7), i.e. a single port that extends substantially around the perimeter of the cylinder 7. However, other embodiments of the port are possible that allow for different shapes and/or the presence of more openings between base wall 5 and cylinder 7. By using an ellipsoidal line 5a it is possible to produce, for example, two or more openings: if the minor axis of the ellipse is equal or less than the diameter D2 of the cylinder 7 (fig. 8) two openings are obtained separated by two points of contact between the base opening and the cylinder 7, if the minor axis of the ellipse is longer than the diameter D2 a continuous non circular opening is obtained around the cylinder 7.

In general, the maximum difference between the line 5a which forms the edge of the opening on the base wall 5 and the wall of cylinder 7 is comprised in the interval between 0.4 and 1.5 mm and preferably 1.5 mm. In any case, the total area of opening is such as to permit the regulation of the delivery of the beverage so as to produce the simultaneous delivery of water and product for at least 75% of the water-dispensing time. This simultaneous dispensing can be checked visually by observing the colour of the liquid coming out from the cartridge outlet: if the liquid is little coloured or substantially uncoloured there is not simultaneous dispensing in the sense indicated above. In practice, it is found that the results are obtained also when the size of piercing and opening differ by very little (for example, when two circumferences are almost equal and differ by 0.01 mm) as long as there are delivery ports 10, even if they are extremely small.

Therefore, an object of the invention is a soluble beverage dispensing device of the type indicated above, in which the ratio between the area of piercing member 7 and the area defined by the breaking line 5a is comprised in the interval between 1.0 and 1.284, but excluding a ratio of 1.0, and with the maximum extent of the space between line 5a (edge of the opening on the base wall 5) and wall of piercing member 7 comprised in the interval between 0.4 mm and 1.5 mm. By area of piercing member 7 is intended the area of the section of piercing member 7 taken at the height of base wall 5 of cartridge 1 when this is housed in the collecting device 2.

In the following description, reference will be made to a preferred embodiment in which member 7 and the line 5a are both circular (fig. 7). In this embodiment, the port 10, i.e. the dispensing opening, is substantially crown-shaped in section and the ratio R between the diameter D1 of said delivery port 10 and the diameter D2 of piercing member 7 is comprised between 1.001 and 1.04, preferably between 1.001 and 1.02 and more preferably between 1.001 and 1.014.

As pointed out above, cartridge 1 is generally made of plastic material, for example ethylene or propylene homo- or co-polymer suitable for use with foodstuffs. A preferred material has crystallinity higher than 70% and such a percentage of amorphous polymer as to give visco-elastic deformation to the base wall of the cartridge during the feeding under pressure of hot water. The term "visco-elastic deformation" means that deformation of the material of the base wall, at least in an area around of the edge of the opening on base wall 5 along the line 5a, is reduced or quite eliminated either by the end of the dispensing or in one or more phases during the dispensing. In other words, during all the phase of dispensing of the beverage, the material of the base wall, at least in said surround of the outlet opening, opposes the deformation caused by the water or other liquid being fed under pressure into the cartridge; in this way, the extent of the deformation and therefore of the dimensions of the delivery port 10 are controlled during the dispensing of the beverage. The material moulding techniques will be chosen so as to conserve as much as possible the percentage of amorphous polymer in the end product. Suitable materials are chosen from (co)polymers of ethylene and propylene, for example (co)polymers of propylene comprising one or more alpha-olefines having 2-10 Carbon atoms, for example ethylene, 1-butene, 1-pentene, 4-methyl-1-pentene, 1-hexene, 1-octene; propylene formulations obtained by sequential polymerization of propylene and its mixtures with ethylene and/or alpha-olefines. The (co)polymers generally have Melt Flow Index between 0.2 and 60 at 230°C/21.6 N.

However, cartridges can be used which undergo plastic deformation of the base wall following feeding under pressure of hot water. In this case the visco-elastic effect described above of opposition to the deformation by the material itself will not occur and "mechanical means" are used in order to limit the extent of the deformation of the base wall.

Figures 5 and 6 show a preferred embodiment of such means, constituted by a ring 12 arranged concentrically with piercing cylinder 7 and distanced from it. Ring 12 is supported on three fins 11 and preferably has a surface portion 13 tilted towards cylinder 7, i.e. towards the inside of device 2, and towards the base wall. The inclination of the upper surface portion 13 is therefore comprised in the interval between 1° and 45°, preferably between 15° and 38° and more preferably 30 ° to the horizontal.

As an alternative to ring 12, radial fins 11 a can be used (fig. 9) that extend to the height of surface 13 of ring 12 and that have a portion of their upper surface shaped in similar way to the slanted surface 13 of the ring and similarly distanced from member 7.

Therefore an object of the invention is a dispensing device of the type described above, in which there are provided means of controlling the deformation of the base wall of the cartridge of the distribution of the beverage. Such means are constituted by a polymer construction material of the cartridge that introduces substantially visco-elastic deformation and/or by mechanical means of support such as a ring or support fins of the base wall. In both cases the extent of the deformation angle of the material surrounding the edge 5a of the product delivery opening is maintained within an interval between 0° and 45°, preferably between 15° and 38° and more preferably around to the 30° during the dispensing of the beverage.

The invention will now be further described with reference to the following examples given purely by way of illustration.

### Example.

Group 1. Ten (10) coffees were dispensed from a Tuttoespresso hot-beverage dispensing machine with a collecting device fitted with a piercing cylinder of diameter (D2) of 14.7 mm and diameter of the cartridge opening (D1) of 15 mm. The cartridge used is made of ethylene co-polymer with substantially visco-elastic deformation of the base wall.

Group 2. Another ten (10) coffees were dispensed with similar cartridges, but made of ethylene co-polymer with higher crystalline content and plastic deformation of the cartridge base wall. The collecting device has a support ring inclined at 30 degrees to the inside and base of the said device.

Group 3. For comparison ten (10) coffees were dispensed under the same conditions and from the same machine using traditional cartridges and collecting device.

The assessment was carried out by measuring the volume (cc) of cream obtained. The results show an average of 12.8 cc of cream for each coffee dispensed in Group 1, an average of 9.6 cc of cream for the coffees dispensed in the Group 2 and an average of 6.8 cc of cream for each coffee dispensed in Group 3 (traditional).

## Claims

1. A device for the preparation of a beverage from a soluble product, of the type comprising a collecting device having a seat suitable to receive a disposable cartridge (1) containing the soluble product (9), said cartridge comprising at least one outlet opening for the delivery of a beverage consisting of said soluble product and a fluid, wherein said at least one outlet opening is defined by at least one breaking line (5a) present on a wall (5) of said cartridge and wherein said collecting device comprises at least one piercing member (7) to pierce said cartridge in correspondence to said breaking line, **characterized by** comprising means of regulating the delivery of said beverage comprising at least one delivery port (10) between the wall of said piercing member (7) and the edge (5a) of said delivery outlet, in which at least said engagement portion of said piercing member (7) is substantially cylindrical in shape with circular section and the said outlet opening is substantially circular in shape, and wherein the ratio R between the diameter of the said outlet opening and the diameter of the engagement portion of said piercing member (7) is 1<R≤1,067.

2. A device according to claim 1, wherein said ratio R is 1<R≤1,04.

3. A device according to claim 1, wherein said ratio R is 1<R≤1,02.

4. A device according to claim 1, wherein said ratio R is 1<R≤1,014.

5. A device according to any claim 1 to 4, further comprising means for controlling deformation of the cartridge base wall during the dispensing phase of said beverage.

6. A device according to Claim, 5, wherein said means of regulation comprise one or more stop elements for limiting the deformation of a portion of the wall of said cartridge in proximity of said outlet opening.

7. A device according to Claim 5, wherein said means comprise at least one portion of the base wall of said cartridge being made of plastic material with visco-elastic behaviour.

8. A device according to Claim 6, wherein said one or more stop elements comprise one or more fins which support said piercing member.

9. A device according to Claim 6, wherein said one or more stop elements comprise at least one annular member having diameter greater than said outlet opening.

10. A device according to Claim 9, wherein said annular member presents a surface portion tilted towards the base wall of said cartridge.

11. A device according to Claim 10, wherein said tilted surface portion has an inclination between 0° and 45° with respect to a horizontal plane supported on said annular member.

12. A device according to Claim 10, wherein said tilted surface portion has an inclination between 15° and 35° with respect to a horizontal plane supported on said annular member.

13. A device according to Claim 10, wherein said tilted surface portion has an inclination of 30° with respect to a horizontal plane supported on said annular member.

14. A method for the preparation of a beverage from a soluble product (9) contained in a disposable cartridge (1), wherein said cartridge is housed in the seat of a collecting device (2) having at least one piercing member (7) in order to open an outlet opening from said capsule, said opening being defined by at least one breaking line (5a) present on a wall (5) of said cartridge and wherein entry of a fluid into said cartridge is provided for through an entry port of the same in order to produce the dispensing of a beverage consisting of said soluble product and said fluid, **characterized by** providing regulation of the dispensing of the said beverage by means of at least one delivery port (10) between the wall (5) of said piercing member and the edge (5a) of said outlet opening, at least said engagement portion of said piercing member (7) being substantially cylindrical in shape with circular section and said outlet being substantially circular in shape, and wherein the ratio R between the diameter of said outlet opening and the diameter of the engagement portion of said piercing member (7) is 1<R≤1,067.

15. A method according to Claim 14, wherein the section of said delivery port is substantially circular crown-shaped, and wherein the ratio R between the diameter of said outlet opening and the diameter of the engagement portion of said piercing member is 1 <R≤1.04.

16. A method according to Claim 14, wherein the section of said delivery port is substantially circular crown-shaped, and wherein the ratio R between the diameter of said outlet opening and the diameter of the engagement portion of said piercing member is 1 <R≤1.02.

17. A method according to Claim 14, wherein the section of said delivery port is substantial circular crown-shaped, and wherein the ratio R between the diameter of said outlet opening and the diameter of the engagement portion of said piercing member is 1<R≤1.014.

18. A method according to Claim 14, further comprising the step of limiting the deformation of a portion of wall of said cartridge in proximity of said outlet opening.

19. A method according to any Claim 14-18, wherein said outlet opening is cut into the base wall of said cartridge.

20. A method according to Claim 18 or 19, wherein said one or more stop elements comprise one or more fins supporting said piercing member.

21. A method according to Claim 18 or 19, wherein said one or more stop elements comprise one or more annular members having diameter greater than said outlet opening.

22. A method according to Claim 21, wherein said annular member has a surface portion tilted towards the base wall of said cartridge.

23. A method according to Claim 22, wherein said fitted surface portion has an inclination between 0° and 45° with respect to a horizontal plane supported on said annular member.

24. A method according to Claim 22, wherein said tilted surface portion has an inclination between 15° and 35° and preferably 30° with respect to a horizontal plane supported on said annular member.

25. A method according to Claim 14, **characterised by** further controling said deformation by means of the use of plastic material with visco-elastic behaviour for the production of said cartridge.

## Patentansprüche

1. Vorrichtung zur Zubereitung eines Getränks aus einem löslichen Produkt, von der Art umfassend eine Sammelvorrichtung mit einem Sitz, der zur Aufnahme einer Wegwerf-Kartusche (1) geeignet ist, die das lösliche Produkt (9) enthält, wobei die Kartusche wenigstens eine Auslassöffnung für die Abgabe eines aus diesem löslichen Produkt und einer Flüssigkeit bestehenden Getränks umfasst, wobei die wenigstens eine Auslassöffnung durch wenigstens eine auf einer Wandung (5) der Kartusche vorhandene Bruchlinie (5a) definiert ist, und wobei die Sammelvorrichtung wenigstens ein Durchstichelement (7) umfasst, um die Kartusche in Übereinstimmung mit der Bruchlinie zu durchstechen, **dadurch gekennzeichnet, dass** sie Hilfsmittel zur Regulierung der Abgabe des Getränks umfasst, umfassend wenigstens einen Abgabestutzen (10) zwischen der Wandung des Durchstichelements (7) und der Kante (5a) der Abgabeöffnung, wobei wenigstens der Verbindungsteil des Durchstichelements (7) im Wesentlichen von zylindrischer Form mit kreisförmigem Querschnitt ist und die Auslassöffnung im Wesentlichen kreisförmig ist, und wobei das Verhältnis R zwischen dem Durchmesser der Auslassöffnung und dem Durchmesser des Verbindungsteils des Durchstichelements (7) 1 < R ≤ 1,067 ist.

2. Vorrichtung nach Anspruch 1, wobei das Verhältnis R 1 < R ≤ 1,04 ist.

3. Vorrichtung nach Anspruch 1, wobei das Verhältnis R 1 < R ≤ 1,02 ist.

4. Vorrichtung nach Anspruch 1, wobei das Verhältnis R 1 < R ≤ 1,014 ist.

5. Vorrichtung nach einem der Ansprüche 1 bis 4, des Weiteren umfassend Hilfsmittel zur Steuerung der Verformung der Basiswandung der Kartusche während der Phase der Ausgabe des Getränks.

6. Vorrichtung nach Anspruch 5, wobei die Hilfsmittel zur Regulierung ein oder mehrere Halteelemente zur Begrenzung der Verformung eines Teils der Kartuschenwandung in der Nähe der Auslassöffnung umfassen.

7. Vorrichtung nach Anspruch 5, wobei die Hilfsmittel wenigstens einen Teil der Basiswandung der Kartusche umfassen, die aus einem Kunststoffmaterial mit viskoelastischem Verhalten besteht.

8. Vorrichtung nach Anspruch 6, wobei das eine oder die mehreren Halteelemente eine oder mehrere Rippen umfassen, die das Durchstichelement tragen.

9. Vorrichtung nach Anspruch 6, wobei das eine oder die mehreren Halteelemente wenigstens ein ringförmiges Element mit einem Durchmesser größer als die Auslassöffnung umfassen.

10. Vorrichtung nach Anspruch 9, wobei das ringförmige Element einen Flächenabschnitt aufweist, der gegen die Basiswandung der Kartusche geneigt ist.

11. Vorrichtung nach Anspruch 10, wobei der geneigte Flächenabschnitt bezüglich einer auf dem ringförmigen Element aufliegenden horizontalen Fläche eine Neigung zwischen 0° und 45° aufweist.

12. Vorrichtung nach Anspruch 10, wobei der geneigte Flächenabschnitt bezüglich einer auf dem ringförmigen Element aufliegenden horizontalen Fläche eine Neigung zwischen 15° und 35° aufweist.

13. Vorrichtung nach Anspruch 10, wobei der geneigte Flächenabschnitt bezüglich einer auf dem ringförmigen Element aufliegenden horizontalen Fläche eine Neigung von 30° aufweist.

14. Verfahren zur Zubereitung eines Getränks aus einem löslichen Produkt (9), enthalten in einer Wegwerf-Kartusche (1), wobei die Kartusche im Sitz einer Sammelvorrichtung (2) untergebracht ist, die wenigstens ein Durchstichelement (7) zum Öffnen einer Auslassöffnung aus der Kapsel aufweist, wobei die Öffnung durch wenigstens eine in der Wandung (5) der Kartusche vorhandene Bruchlinie (5a) definiert ist, und wobei der Zugang einer Flüssigkeit in die Kartusche durch einen Einlassstutzen derselben bereitgestellt wird, um die Ausgabe eines Getränks, bestehend aus dem löslichen Produkt und der Flüssigkeit, zu erhalten, **dadurch gekennzeichnet, dass** die Regulierung der Getränkeausgabe mit Hilfe wenigstens eines Abgabestutzens (10) zwischen der Wandung (5) des Durchstichelements und der Kante (5a) der Auslassöffnung erfolgt, wobei wenigstens der Verbindungsteil des Durchstichelements (7) im Wesentlichen von zylindrischer Form mit kreisförmigem Querschnitt ist und der Auslass im Wesentlichen kreisförmig ist, und wobei das Verhältnis R zwischen dem Durchmesser der Auslassöffnung und dem Durchmesser des Verbindungsteils des Durchstichelements (7) 1 < R ≤ 1,067 ist.

15. Verfahren nach Anspruch 14, wobei der Abschnitt des Abgabestutzens im Wesentlichen kreisförmig mit Kronenform ist, und wobei das Verhältnis R zwischen dem Durchmesser der Auslassöffnung und dem Durchmesser des Verbindungsteils des Durchstichelements 1 < R ≤ 1,04 ist.

16. Verfahren nach Anspruch 14, wobei der Abschnitt des Abgabestutzens im Wesentlichen kreisförmig mit Kronenform ist, und wobei das Verhältnis R zwischen dem Durchmesser der Auslassöffnung und dem Durchmesser des Verbindungsteils des Durchstichelements 1 < R ≤ 1,02 ist.

17. Verfahren nach Anspruch 14, wobei der Abschnitt des Abgabestutzens im Wesentlichen kreisförmig mit Kronenform ist, und wobei das Verhältnis R zwischen dem Durchmesser der Auslassöffnung und dem Durchmesser des Verbindungsteils des Durchstichelements 1 < R ≤ 1,014 ist.

18. Verfahren nach Anspruch 14, des Weiteren umfassend den Schritt der Begrenzung der Verformung eines Teils der Wandung der Kartusche in der Nähe der Auslassöffnung.

19. Verfahren nach einem der Ansprüche 14 bis 18, wobei die Auslassöffnung in die Basiswandung der Kartusche eingeschnitten ist.

20. Verfahren nach Anspruch 18 oder 19, wobei das eine oder die mehreren Halteelemente eine oder mehrere Rippen umfassen, die das Durchstichelement tragen.

21. Verfahren nach Anspruch 18 oder 19, wobei das eine oder die mehreren Halteelemente ein oder mehrere ringförmige Elemente mit einem Durchmesser größer als die Auslassöffnung umfassen.

22. Verfahren nach Anspruch 21, wobei das ringförmige Element einen Flächenabschnitt aufweist, der gegen die Basiswandung der Kartusche geneigt ist.

23. Verfahren nach Anspruch 22, wobei der geneigte Flächenabschnitt bezüglich einer auf dem ringförmigen Element aufliegenden horizontalen Fläche eine Neigung zwischen 0° und 45° aufweist.

24. Verfahren nach Anspruch 22, wobei der geneigte Flächenabschnitt bezüglich einer auf dem ringförmigen Element aufliegenden horizontalen Fläche eine Neigung zwischen 15° and 35° und vorzugsweise 30° aufweist.

25. Verfahren nach Anspruch 14, **dadurch gekennzeichnet, dass** des Weiteren die Verformung durch Verwendung eines Kunststoffmaterials mit viskoelastischem Verhalten für die Herstellung der Kartusche gesteuert wird.

## Revendications

1. Dispositif pour la préparation d'une boisson à partir d'un produit soluble, du type comprenant un dispositif de collecte comportant une assise adaptée pour recevoir un gobelet jetable (1) contenant le produit soluble (9), ledit gobelet comprenant au moins une ouverture de décharge pour la fourniture d'une boisson consistant en ledit produit soluble et un fluide, dans lequel ladite au moins une ouverture de décharge est définie par au moins une ligne de rupture (5a) présente sur une paroi (5) dudit gobelet et dans lequel ledit dispositif de collecte comprend au moins un élément de perçage (7) destiné à percer ledit gobelet d'une manière correspondant à ladite ligne de rupture, **caractérisé en ce qu'**il comprend des moyens de régulation de la fourniture de ladite boisson comprenant au moins un port de fourniture (10) entre la paroi dudit élément de perçage (7) et le bord (5a) de ladite ouverture de décharge, dans lequel au moins ladite partie d'engagement dudit élément de perçage (7) est sensiblement de forme cylindrique avec une coupe circulaire et ladite ouverture de décharge est sensiblement de forme circulaire, et dans lequel le rapport R entre le diamètre de ladite ouverture de décharge et le diamètre de la partie d'engagement dudit élément de perçage (7) est de 1 < R ≤ 1,067.

2. Dispositif selon la revendication 1, dans lequel ledit rapport R est de 1 < R ≤ 1,04.

3. Dispositif selon la revendication 1, dans lequel ledit rapport R est de 1 < R ≤ 1,02.

4. Dispositif selon la revendication 1, dans lequel ledit rapport R est de 1 < R ≤ 1,014.

5. Dispositif selon l'une quelconque des revendications 1 à 4, comprenant en outre des moyens destinés à contrôler la déformation de la paroi de base du gobelet pendant la phase d'amenée de ladite boisson.

6. Dispositif selon la revendication 5, dans lequel lesdits moyens de régulation comprennent un ou plusieurs éléments d'arrêt destinés à limiter la déformation d'une partie de la paroi dudit gobelet à proximité de ladite ouverture de décharge.

7. Dispositif selon la revendication 5, dans lequel lesdits moyens comprennent au moins une partie de la paroi de base dudit gobelet composée de plastique aux propriétés viscoélastiques.

8. Dispositif selon la revendication 6, dans lequel un ou plusieurs éléments d'arrêt comprennent un ou plusieurs ergots qui supportent ledit élément de perçage.

9. Dispositif selon la revendication 6, dans lequel lesdits un ou plusieurs éléments d'arrêt comprennent au moins un élément annulaire présentant un diamètre supérieur ladite ouverture de décharge.

10. Dispositif selon la revendication 9, dans lequel ledit élément annulaire présente une partie de surface inclinée vers la paroi de base dudit gobelet.

11. Dispositif selon la revendication 10, dans lequel ladite partie de surface inclinée présente une inclinaison comprise entre 0° et 45° par rapport à un plan horizontal supporté sur ledit élément annulaire.

12. Dispositif selon la revendication 10, dans lequel ladite partie de surface inclinée présente une inclinaison comprise entre 15° et 35° par rapport à un plan horizontal supporté sur ledit élément annulaire.

13. Dispositif selon la revendication 10, dans lequel ladite partie de surface inclinée présente une inclinaison de 30° par rapport à un plan horizontal supporté sur ledit élément annulaire.

14. Procédé de préparation d'une boisson à partir d'un produit soluble (9) contenu dans un gobelet jetable (1), dans lequel ledit gobelet est logé dans l'assise d'un dispositif de collecte (2) comprenant au moins un élément de perçage (7) afin d'ouvrir une ouverture de décharge à partir de ladite capsule, ladite ouverture étant définie par au moins une ligne de rupture (5a) présente sur une paroi (5) dudit gobelet et dans lequel l'entrée d'un fluide dans ledit gobelet est prévue via un port d'entrée de celui-ci afin de produire l'amenée d'une boisson constituée dudit produit soluble et dudit fluide, **caractérisé en ce qu'**est prévue une régulation de l'amenée de ladite boisson au moyen d'au moins un port de fourniture (10) entre la paroi (5) dudit élément de perçage et le bord (5a) de ladite ouverture de décharge, au moins ladite partie d'engagement dudit élément de perçage (7) étant sensiblement de forme cylindrique avec une coupe circulaire et ladite ouverture étant sensiblement de forme circulaire, et dans lequel le rapport R entre le diamètre de ladite ouverture de décharge et le diamètre de la partie d'engagement dudit élément de perçage (7) est de 1 < R ≤ 1,067.

15. Procédé selon la revendication 14, dans lequel la coupe dudit port de fourniture est sensiblement en forme de couronne circulaire, et dans lequel le rapport R entre le diamètre de ladite ouverture de décharge et le diamètre de la partie d'engagement dudit élément de perçage est de 1 < R ≤ 1,04.

16. Procédé selon la revendication 14, dans lequel la coupe dudit port de fourniture est sensiblement en forme de couronne circulaire, et dans lequel le rapport R entre le diamètre de ladite ouverture de décharge et le diamètre de la partie d'engagement dudit élément de perçage est de 1 < R ≤ 1,02.

17. Procédé selon la revendication 14, dans lequel la coupe dudit port de fourniture est sensiblement en forme de couronne circulaire, et dans lequel le rapport R entre le diamètre de ladite ouverture de décharge et le diamètre de la partie d'engagement dudit élément de perçage est de 1 < R ≤ 1,014.

18. Procédé selon la revendication 14, comprenant en outre l'étape de limitation de la déformation d'une partie de paroi dudit gobelet à proximité de ladite ouverture de décharge.

19. Procédé selon l'une quelconque des revendications 14 à 18, dans lequel ladite ouverture de décharge est découpée dans la paroi de base dudit gobelet.

20. Procédé selon la revendication 18 ou 19, dans lequel lesdits un ou plusieurs éléments d'arrêt comprennent un ou plusieurs ergots supportant ledit élément de perçage.

21. Procédé selon la revendication 18 ou 19, dans lequel lesdits un ou plusieurs éléments d'arrêt comprennent un ou plusieurs éléments annulaires présentant un diamètre supérieur à ladite ouverture de décharge.

22. Procédé selon la revendication 21, dans lequel ledit élément annulaire présente une partie de surface inclinée vers la paroi de base dudit gobelet.

23. Procédé selon la revendication 22, dans lequel ladite partie de surface inclinée présente une inclinaison comprise entre 0° et 45° par rapport à un plan horizontal supporté sur ledit élément annulaire.

24. Procédé selon la revendication 22, dans lequel ladite partie de surface inclinée présente une inclinaison comprise entre 15° et 35° et de préférence de 30° par rapport à un plan horizontal supporté sur ledit élément annulaire.

25. Procédé selon la revendication 14, **caractérisé en ce qu'**il comprend en outre un contrôle de ladite déformation au moyen de l'utilisation d'un matériau plastique avec des propriétés viscoélastiques pour la production dudit gobelet.
